# EUROPÄISCHE PATENTSCHRIFT

(11) **EP 3 585 628 B1**
(45) Veröffentlichungstag und Bekanntmachung des Hinweises auf die Patenterteilung: **18.11.2020**
(21) Anmeldenummer: 18701285.1
(22) Anmeldetag: 15.01.2018
(51) Int. Cl.: B60C 13/02, B60C 23/19, B60C 11/01, B60C 11/11, B60C 11/03

(54) **FAHRZEUGLUFTREIFEN**
PNEUMATIC VEHICLE TYRE
PNEUMATIQUE DE VÉHICULE

(30) Priorität: 24.02.2017 DE 102017203012
(43) Veröffentlichungstag der Anmeldung: 01.01.2020
(73) Patentinhaber: Continental Reifen Deutschland GmbH, 30165 Hannover (DE)
(72) Erfinder: LIPPERT, Frank, 31275 Lehrte (DE); KRISTEN, Florian, 30171 Hannover (DE); MEINERS, Christian, 30459 Hannover (DE); NAGLATZKI, Paul, 30159 Hannover (DE)
(74) Vertreter: Finger, Karsten
(86) Internationale Anmeldenummer: PCT/EP2018/050803
(87) Internationale Veröffentlichungsnummer: WO 2018/153569

(56) Entgegenhaltungen:
- EP-A1- 1 314 581
- JP-A- H11 151 910
- JP-A- S63 130 407
- JP-A- 2003 211 915
- JP-A- 2006 027 498
- JP-A- 2006 168 379
- JP-A- 2010 132 042
- JP-A- 2010 132 043

## Beschreibung

Die Erfindung betrifft einen Fahrzeugluftreifen, insbesondere Nutzfahrzeugreifen, mit einer ein- oder mehrlagigen Karkasse, einem mehrlagigen Gürtel bzw. Breaker und mit einem profilierten Laufstreifen mit auf Profiltiefe ausgeführten Rillen, wobei der profilierte Laufstreifen bei den Reifenschultern
- entweder mit je einer Blockreihe, deren Blöcke durch Querrillen voneinander getrennt sind,
- oder mit je einer Profirippe versehen ist,
wobei die Blöcke der schulterseitigen Blockreihen bzw. die schulterseitigen Profilrippen jeweils eine die Bodenaufstandsfläche der Reifens seitlich begrenzende Randkante oder eine Schulterrundung mit einem Radius von bis zu 30,0 mm aufweisen, wobei an die Randkanten bzw. die Schulterrundungen in radialer Richtung verlaufende Schulterflankenflächen anschließen, und wobei bei Schulterrundungen zwischen einer über die Schulterrundung fortgesetzten Einhüllenden des Laufstreifens und der über die Schulterrundung fortgesetzten Schulterflankenfläche eine gedachte Schnittlinie definiert ist, wobei die Schulterflankenflächen über den Reifenumfang in insbesondere regelmäßigen Abständen mit zumindest einer flächigen Vertiefung mit einer Tiefe von 0,5 mm bis 5,0 mm versehen sind, welche parallel zueinander verlaufende Rippen enthält, deren Höhe derart ist, dass die Rippen das Niveau der Schulterflankenflächen nicht überragen.

Ein derartiger Fahrzeugluftreifen ist beispielsweise aus der JP 2006 027 498 A bekannt. Der Laufstreifen dieses Fahrzeugluftreifens weist zwei schulterseitige Blockreihen mit jeweils einer Schulterrundung auf. An den Schulterflankenflächen sind flächige Vertiefungen ausgebildet, welche im in Umfangsrichtung ausgerichteten Querschnitt vorzugsweise konkav gekrümmt sind, bis zu den Querrillen reichen und eine Tiefe von 0,5 mm bis 1,5 mm aufweisen. Am Boden der flächigen Vertiefungen ist jeweils eine Vielzahl von parallel zueinander verlaufenden Rippen ausgebildet, welche das Niveau der Schulterflankenflächen nicht überragen und zu einer Kühlung der Reifenschultern beitragen.

Die JP 2006 168 379 A offenbart einen Fahrzeugluftreifen mit einem Laufstreifen mit schulterseitigen Profilrippen mit Randkanten, an welche Schulterflanken anschließen, die mit einer Vielzahl von in Umfangsrichtung umlaufenden Vertiefungen versehen sind. Die Vertiefungen verleihen den Schulterflanken, im Querschnitt des Reifens betrachtet, abschnittsweise ein beispielsweise treppenförmiges Profil. Diese Ausgestaltung soll zu guten Fahreigenschaften auf Eis- und Schnee beitragen.

Aus der JP H11 151 910 A ist ein Nutzfahrzeugreifen, welcher beispielsweise für LKWs oder Busse vorgesehen ist, bekannt. Der Laufstreifen weist schulterseitige Profilrippen auf, an deren Schulterflanken jeweils in Umfangsrichtung umlaufende rippenartige Strukturen ausgebildet sind.

Die EP 1 314 581 A1 offenbart einen Fahrzeugluftreifen mit einem asymmetrischen Laufstreifen, welcher gemäß einem Ausführungsbeispiel in der einen Laufstreifenhälfte zwei auf Profiltiefe ausgeführte Umfangsrillen aufweist und in der anderen Laufstreifenhälfte frei von Umfangsrillen ist. An jener Schulterflanke, welche an die von Umfangsrillen freie Laufstreifenhälfte anschließt, sind beispielsweise vier in Umfangsrichtung umlaufende, im Querschnitt des Reifens U-förmige, schmale Nuten nebeneinander ausgebildet. Der Reifen wird derart am Fahrzeug montiert, dass die schmalen Nuten der Fahrzeugaußenseite zugeordnet sind.

Ferner offenbaren die JP 2010 132 042 A und die JP 2010 132 043 A jeweils einen Nutzfahrzeugreifen mit einem Laufstreifen mit schulterseitigen Profilrippen mit Schulterflanken. Bei dem in der JP 2010 132 042 A offenbarten Nutzfahrzeugreifen sind an den Schulterflanken mehrere nebeneinander ausgebildete, in Umfangsrichtung umlaufende Vertiefungen vorgesehen. Der aus der JP 2010 132 043 A bekannte Nutzfahrzeugreifen weist Schulterflanken mit einer Vielzahl von sich in radialer Richtung erstreckenden, quaderförmigen Vertiefungen auf. Die Vertiefungen dienen jeweils zur Kühlung der Reifenschultern und sollen sich bei der Vulkanisation gut ausformen lassen.

Aus der JP S63 130 407 A ist ein Nutzfahrzeugreifen bekannt, welcher am radial äußeren Endabschnitt seiner Seitenwände mit in Umfangsrichtung umlaufenden Vertiefungen versehen ist, um auf diese Weise den Rollwiderstand zu reduzieren.

Je nach Einsatzzweck weisen Fahrzeugluftreifen üblicherweise entweder einen Laufstreifen mit einem Blockprofil mit schulterseitigen Profilblockreihen oder ein Laufstreifenprofil mit schulterseitigen Profilrippen auf. Reifen mit Blockprofilen besitzen in den Reifenschultern nach außen mündende Querrillen, die je nach Profilgestaltung zueinander auch relativ große Abstände aufweisen können. Um die Abriebeigenschaften und die Performance des Reifens zu verbessern, werden, insbesondere bei groß dimensionierten Nutzfahrzeugreifen, in schulterseitigen Querrillen sogenannte Blockanbindungen bzw. Grundanhebungen zur Stabilisierung der Reifenschultern vorgesehen. Insbesondere Nutzfahrzeugreifen für spezielle Einsatzzwecke, beispielsweise Reifen für Portalhubwagen (Straddle Carrier) besitzen viel Gummimaterial in den schulterseitigen Laufstreifenbereichen, wodurch sich diese Bereiche im Betrieb der Reifen relativ stark erwärmen. Eine zu geringe Kühlung bzw. eine zu hohe Wärmeentwicklung im Gummimaterial führt zu einem unerwünscht hohen Temperaturaufbau, der sich einerseits negativ auf die Reifenperformance auswirkt und andererseits nachteilig für die Haltbarkeit der nahe der Schulterbereiche innen befindlichen Gürtel- oder Breakerkanten ist.

Der Erfindung liegt daher die Aufgabe zugrunde, bei Fahrzeugluftreifen der eingangs genannten Art im Bereich der Reifenschultern für einfache aber wirksame Maßnahmen zur Verbesserung der Kühlung und der Wärmeableitung zu sorgen.

Gelöst wird die gestellte Aufgabe erfindungsgemäß dadurch,
dass die Schulterflankenflächen innerhalb eines Abstandes von der jeweiligen Randkante oder bei Schulterrundungen von der gedachten Schnittlinie, welcher das 1,25-Fache bis 2,5-Fache der Profiltiefe beträgt, mit der zumindest einen flächigen Vertiefung (6, 6', 6") versehen sind,
- wobei jeweils zwei in radialer Richtung übereinander angeordnete Vertiefungen vorgesehen sind, deren geringster Abstand voneinander 2,0 mm beträgt und/oder
- wobei zumindest eine schulterseitigen Blockreihen vorgesehen ist, deren Querrillen an der Schulterflankenfläche nach außen münden, wobei die Rillengründe der Querrillen sich in radialer Richtung über 10% bis 30% der Profiltiefe erstreckende, gegenüber der Schulterflankenfläche nach innen versetzte Endabschnitte aufweisen, welche ebenfalls mit Rippen versehen sind, die das Niveau der Schulterflankenflächen nicht überragen.

Durch die Rippen wird in jenem Bereich der Reifenschultern, in welchem durch viel Gummimaterial eine relativ hohe Wärmentwicklung beim Betrieb der Reifen stattfindet, die Gummioberfläche vergrößert und dadurch die Wärmeableitung in diesem Bereich verbessert.

Die erstgenannte Maßnahme erlaubt eine gezielte Positionierung der mit Rippen versehenen bzw. bedeckten Vertiefungen nahe jener Stellen an den Schulterflankenflächen, an welchen eine Unterstützung der Ableitung von Wärme besonders vorteilhaft ist.

Die die schulterseitige Blockreihe(n) betreffende Maßnahme gestattet es, in den besonders heiklen Bereichen von schulterseitigen Querrillen, die Blockanbindungen oder Grundanhebungen aufweisen und daher relativ viel Gummimaterial besitzen, für eine Unterstützung der Wärmeableitung zu sorgen.

Bei einer bevorzugten Ausführungsform der Erfindung weisen die Vertiefungen eine radiale Erstreckung von 10% bis 70% der Profiltiefe und in Umfangsrichtung eine Erstreckung von 70% bis 120% der Profiltiefe auf. Die vorliegenden Vertiefungen sind daher bevorzugt lokal, in ihrer Ausdehnung begrenzt, über den Umfang der Schulterflankenflächen vorgesehen. Insbesondere die Erstreckung in Umfangsrichtung kann jedoch auch größer sein, wobei auch eine einzige, über die Schulterflankenfläche kreisringförmig umlaufende Vertiefung, deren Boden insbesondere mit Rippen bedeckt ist, vorgesehen sein.

Die flächigen Vertiefungen sind ferner bevorzugt viereckig gestaltet, können jedoch in Draufsicht beliebig geformte Flächen sein.

Bevorzugt ist ferner eine Ausführung, bei der die Rippen an ihrer Basis eine Breite von 1,0 mm bis 5,0 mm aufweisen, ihr gegenseitiger Abstand von Mitte zur Mitte benachbarter Rippen beträgt insbesondere 1,2 mm bis 7,0 mm. Die Rippen weisen ferner eine Höhe von 0,5 mm bis 5,0 mm auf. Die tatsächliche Dimensionierung der Rippen richtet sich nach der erwünschten Kühlwirkung und nach der Größe des Nutzfahrzeugreifens, bei welchem diese Maßnahme getroffen wird.

Der Querschnitt der Rippen ist insbesondere trapezförmig oder halbkreisförmig.

Über den Reifenumfang ist es vorteilhaft, wenn die Vertiefungen in Abständen von 5 cm bis 15 cm vorgesehen sind.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Schrägansicht eines Umfangabschnittes eines Laufstreifens eines Fahrzeugluftreifen im Bereich der einen Reifenschulter mit einer Ausführungsform der Erfindung,
Fig. 2 eine Schnittdarstellung entlang der in Figur 1 durch die Linie II - II angedeuteten Schnittebene und
Fig. 3 zeigt eine Ansicht eines Umfangabschnittes einer Schulterflanke eines Fahrzeugluftreifens gemäß einer weiteren Ausführungsvariante der Erfindung.

Erfindungsgemäß ausgeführte Fahrzeugluftreifen sind insbesondere Off-The-Road-Reifen oder Nutzfahrzeugreifen für unterschiedlichste Einsatzzwecke, vorzugsweise groß dimensionierte Nutzfahrzeugreifen für Felgendurchmesser von mindestens 24 Zoll. Solche Reifen sind beispielsweise Reifen für Portalhubwagen, Reachstacker oder Containerstapler. Erfindungsgemäß ausgeführte Reifen weisen eine ein-oder mehrlagige Karkasse, entweder als Radialkarkasse oder als Diagonalkarkasse, und einen mehrlagigen Gürtelverband oder mehrere Breakerlagen auf.

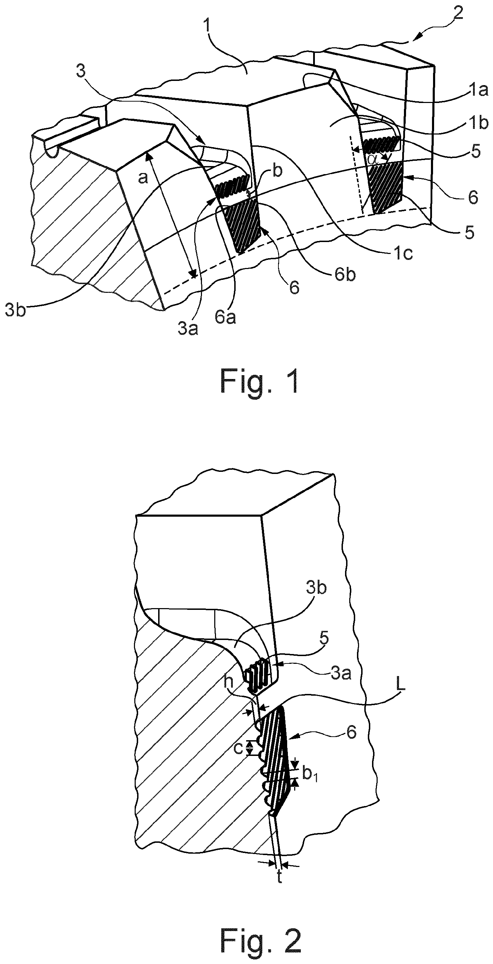

Fig. 1 zeigt von einem Nutzfahrzeugreifen, welcher beispielsweise ein Reifen für Reachstacker oder Containerstapler ist, mit einem ausgeprägten Blockprofil im Laufstreifen Blöcke 1 einer schulterseitigen Blockreihe 2. Die Blöcke 1 weisen reifenschulterseitig Randkanten 1a auf, welche die Bodenaufstandsfläche des Laufstreifens seitlich begrenzen und sind in Umfangsrichtung voneinander durch Querrillen 3 getrennt. Die Querrillen 3 und/oder weitere, nicht dargestellte Rillen im Laufstreifen weisen die vorgesehene Profiltiefe, die bei Nutzfahrzeugreifen in der Größenordnung von 12 mm bis 95 mm betragen kann, auf. Die Blöcke 1 weisen schulterseitige Blockflanken 1b auf, welche in Umfangsrichtung von in radialer Richtung verlaufenden Blockkanten 1c begrenzt sind und gemeinsam mit dem unmittelbar in radialer Richtung anschließenden und umliegenden Flankenbereich eine Schulterflankenfläche bilden.

Der Rillengrund 3b jeder Querrille 3 weist einen im Wesentlichen parallel zur Schulterflankenfläche verlaufende Endabschnitt 3a auf, der gegenüber der Schulterflankenfläche insbesondere um bis insbesondere bis zu 7,0 mm nach innen versetzt ist und in radialer Richtung eine Erstreckung von 10% bis 30% der Profiltiefe aufweist. Die im Wesentlichen rechteckigen Endabschnitte 3a sind mit parallel zueinander verlaufenden Rippen 5 bedeckt, welche das Niveau der Schulterflankenfläche nicht überragen.

Radial innerhalb des mit Rippen 5 versehenen Endabschnittes 3a jeder Querrille 3 befindet sich eine ebenfalls mit Rippen 5 versehene, insbesondere bedeckte Vertiefung 6 mit einer insbesondere konstanten Tiefe t von 0,5 mm bis 5,0 mm. Die am Boden der Vertiefung 6 befindlichen Rippen 5 weisen eine Höhe h auf, die höchstens der Tiefe t entspricht. Die Vertiefungen 6 befinden sich radial außerhalb eines Abstandes a von der Randkante 1a, welche das 1,25-Fache bis 2,5-Fache der Profiltiefe beträgt.

Bei der gezeigten Ausführung ist die Vertiefung 6 als Viereck gestaltet, mit einer radial äußeren, insbesondere in Umfangsrichtung verlaufende Kante 6a, deren geringster Abstand b vom radial inneren Ende des Endabschnittes 3a 2,0 mm bis 10, 0 mm beträgt.

Die maximale Erstreckung der Vertiefung 6 in Umfangsrichtung beträgt 70% bis 120% der Umfangserstreckung des Endabschnittes 3a. Bei der dargestellten bevorzugten Ausführung weist die Vertiefung 6 in radialer Richtung verlaufende Seitenkanten 6b auf, welche in Verlängerung der Blockkanten 1c verlaufen. Die Seitenkanten 6b der Vertiefungen 6 können jedoch auch abweichend verlaufen, insbesondere unter einem Winkel von 0° bis 45° zur radialen Richtung.

Die Rippen 5 weisen eine Höhe h auf, die 0,5 mm bis 5 mm, insbesondere mindestens 3,0 mm, beträgt. Wie insbesondere Fig. 2 zeigt sind die Rippen 5 im Querschnitt im Wesentlichen gleichschenkelige Trapeze, ihre Breite b₁ an der Basis ihres Querschnittes beträgt 1,0 mm bis 5,0 mm der gegenseitige Abstand c der Rippen 5 - jeweils von Mitte zu Mitte - beträgt 1,2 mm bis 7,0 mm. Die Rippen 5 können im Querschnitt auch gerundet ausgeführt sein, beispielweise halbkreisförmig. Wie beispielweise Fig. 1 zeigt, verlaufen die Rippen 5 zur radialen Richtung unter einem spitzen Winkel a, welcher 10° bis 75°, insbesondere 20° bis 40°, beträgt. Sämtliche Rippen 5 innerhalb der Endabschnitte 3a und der Vertiefungen 6 sind vorzugsweise gleich ausgeführt und angeordnet.

Die Rippen 5 bewirken eine Vergrößerung der äußeren Oberfläche des Reifens an den Reifenschultern und wirken daher als Kühlrippen, die ein Ableiten der Wärme aus dem Gummimaterial in den Reifenschultern unterstützen. Die Schrägstellung der Rippen 5 unter dem erwähnten Winkel α hat den Vorteil, dass die beim Abrollen des Reifens vorbei streifende Luft die Wärmeableitung weiter verbessert.

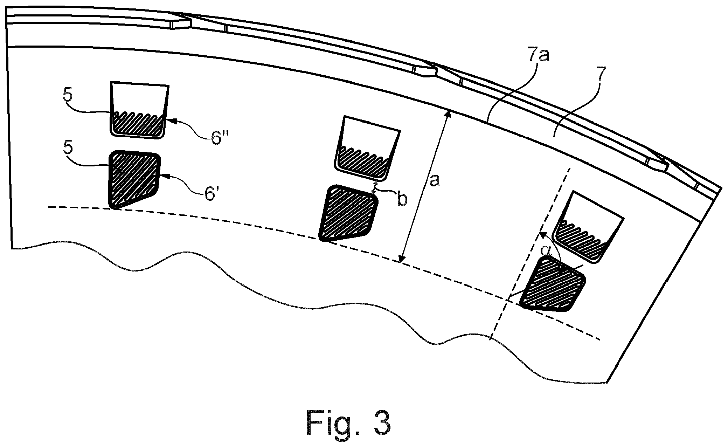

Bei der in Fig. 3 gezeigten Ausführungsvariante weist der Laufstreifen schulterseitig an Stelle einer Blockreihe eine Schulterrippe 7 auf, so dass an den Reifenschultern radial innerhalb der Randkante 7a der Schulterrippe 7 eine einheitliche, von Querrillen nicht unterbrochene Schulterflankenfläche vorliegt. Auch bei dieser Ausführungsvariante sind Vertiefungen 6' mit Rippen 5, wie bereits beschrieben, vorgesehen. Radial außerhalb jeder Vertiefung 6' befindet sich eine weitere Vertiefung 6", die bei der gezeigten Ausführung in ihrer radial inneren Hälfte mit Rippen 5 versehen ist. Die Vertiefungen 6', 6" sind jeweils paarweise übereinander angeordnet und befinden sich innerhalb des Abstandes a von der Randkante 7a.

Je nach Reifengröße sind die Vertiefungen 6, 6' über den Reifenumfang in Abständen von 5 cm bis 15 cm vorgesehen. Bei alternativen Ausführungen des erfindungsgemäßen Fahrzeugluftreifens sind diee Randkanten 1a können mit einem Radius von insbesondere 1,0 mm bis 30,0 mm gerundet oder mit einer Fase einer Breite von bis zu 5,0 mm versehen. Der Abstand a wird bei diesen Ausführungen von einer gedachten Schnittlinie zwischen einer über die Schulterrundung bzw. Fase fortgesetzten Einhüllenden des Laufstreifens und der über die Schulterrundung bzw. Fase fortgesetzten Schulterflankenfläche ermittelt.

### Bezugszeichenliste

- 1: Block
- 1a: Randkante
- 1b: Schulterflanke
- 1c: Blockkante
- 2: Blockreihe
- 3: Querrille
- 3a: Endabschnitt
- 3b: Rillengrund
- 5: Rippe
- 6, 6', 6": Vertiefung
- 6a: Kante
- 36b: Seitenkante
- 7: Schulterrippe
- 7a: Randkante
- a, b, c: Abstand
- b₁: Breite
- h: Höhe
- t: Tiefe

## Patentansprüche

1. Fahrzeugluftreifen, insbesondere Nutzfahrzeugreifen, mit einer ein- oder mehrlagigen Karkasse, einem mehrlagigen Gürtel bzw. Breaker und mit einem profilierten Laufstreifen mit auf Profiltiefe ausgeführten Rillen, wobei der profilierte Laufstreifen bei den Reifenschultern
- entweder mit je einer Blockreihe (2), deren Blöcke durch Querrillen (3) voneinander getrennt sind,
- oder mit je einer Profirippe (7) versehen ist,
wobei die Blöcke (1) der schulterseitigen Blockreihen (2) bzw. die schulterseitigen Profilrippen (7) jeweils eine die Bodenaufstandsfläche der Reifens seitlich begrenzende Randkante (1a, 7a) oder eine Schulterrundung mit einem Radius von bis zu 30,0 mm aufweisen, wobei an die Randkanten (1a, 7a) bzw. die Schulterrundungen in radialer Richtung verlaufende Schulterflankenflächen anschließen, und wobei bei Schulterrundungen zwischen einer über die Schulterrundung fortgesetzten Einhüllenden des Laufstreifens und der über die Schulterrundung fortgesetzten Schulterflankenfläche eine gedachte Schnittlinie definiert ist,
wobei die Schulterflankenflächen über den Reifenumfang in insbesondere regelmäßigen Abständen mit zumindest einer flächigen Vertiefung (6, 6',6") mit einer Tiefe (t) von 0,5 mm bis 5,0 mm versehen sind, welche parallel zueinander verlaufende Rippen (5) enthält, deren Höhe (h) derart ist, dass die Rippen (5) das Niveau der Schulterflankenflächen nicht überragen,
**dadurch gekennzeichnet,**
**dass** die Schulterflankenflächen innerhalb eines Abstandes (a) von der jeweiligen Randkante (1a, 7a) oder bei Schulterrundungen von der gedachten Schnittlinie, welcher das 1,25-Fache bis 2,5-Fache der Profiltiefe beträgt, mit der zumindest einen flächigen Vertiefung (6, 6', 6") versehen sind,
- wobei jeweils zwei in radialer Richtung übereinander angeordnete Vertiefungen (6', 6") vorgesehen sind, deren geringster Abstand voneinander 2,0 mm beträgt und/oder
- wobei zumindest eine schulterseitige Blockreihe (2) vorgesehen ist, deren Querrillen (3) an der Schulterflankenfläche nach außen münden, wobei die Rillengründe (3b) der Querrillen (3) sich in radialer Richtung über 10% bis 30% der Profiltiefe erstreckende, gegenüber der Schulterflankenfläche nach innen versetzte Endabschnitte (3a) aufweisen, welche ebenfalls mit Rippen (5) versehen sind, die das Niveau der Schulterflankenflächen nicht überragen.

2. Fahrzeugluftreifen nach Anspruch 1, **dadurch gekennzeichnet, dass** die Vertiefungen (6, 6', 6") eine radiale Erstreckung von 10% bis 70% der Profiltiefe aufweisen.

3. Fahrzeugluftreifen nach Anspruch 1 oder 2, **dadurch gekennzeichnet, dass** die Vertiefungen (6, 6', 6") in Umfangrichtung eine Erstreckung von 70% bis 120% der Profiltiefe aufweisen.

4. Fahrzeugluftreifen nach einem der Ansprüche 1 bis 3, **dadurch gekennzeichnet, dass** der Boden der Vertiefungen (6, 6') mit den Rippen (5) bedeckt ist.

5. Fahrzeugluftreifen nach einem der Ansprüche 1 bis 4, **dadurch gekennzeichnet, dass** die Vertiefungen (6, 6', 6") viereckig gestaltet sind.

6. Fahrzeugluftreifen nach einem der Ansprüche 1 bis 5, **dadurch gekennzeichnet, dass** die Rippen (5) an ihrer Basis eine Breite (b₁) von 1,0 mm bis 5,0 mm aufweisen.

7. Fahrzeugluftreifen nach einem der Ansprüche 1 bis 6, **dadurch gekennzeichnet, dass** die Rippen (5) von Mitte zu Mitte einen gegenseitigen Abstand (c) von 1,2 mm bis 7,0 mm aufweisen.

8. Fahrzeugluftreifen nach einem der Ansprüche 1 bis 7, **dadurch gekennzeichnet, dass** die Rippen (5) eine Höhe (h) von 0,5 mm bis 5,0 mm aufweisen.

9. Fahrzeugluftreifen nach einem der Ansprüche 1 bis 8, **dadurch gekennzeichnet, dass** die Rippen (5) im Querschnitt trapezförmig oder halbkreisförmig sind.

10. Fahrzeugluftreifen nach einem der Ansprüche 1 bis 9, **dadurch gekennzeichnet, dass** die Vertiefungen (6, 6°, 6") über den Reifenumfang in Abständen von 5 cm bis 15 cm vorgesehen sind.

## Claims

1. Pneumatic vehicle tire, in particular commercial-vehicle tire, having a one- or multi-ply carcass, a multi-ply belt or breaker and having a profiled tread with grooves formed to a profile depth, wherein the profiled tread is provided at the tire shoulders
- either with a respective block row (2), the blocks of which are separated from one another by transverse grooves (3),
- or with a respective profile rib (7),
wherein the blocks (1) of the shoulder-side block rows (2) or the shoulder-side profile ribs (7) each have a peripheral edge (1a, 7a) laterally delimiting the ground contact patch of the tire, or a shoulder rounding with a radius of up to 30.0 mm, wherein shoulder flank surfaces that extend in a radial direction adjoin the peripheral edges (1a, 7a) or the shoulder roundings, and wherein, in the case of shoulder roundings, an imaginary section line is defined between an envelope of the tread that is continued beyond the shoulder rounding and the shoulder flank surface that is continued beyond the shoulder rounding,
wherein the shoulder flank surfaces are provided, at in particular regular intervals over the tire circumference, with at least one areal recess (6, 6', 6") having a depth (t) of 0.5 mm to 5.0 mm, which contains ribs (5) that extend parallel to one another and have a height (h) such that the ribs (5) do not project beyond the level of the shoulder flank surfaces,
**characterized**
**in that** the shoulder flank surfaces are provided, within a distance (a) of 1.25 times to 2.5 times the profile depth from the respective peripheral edge (1a, 7a) or, in the case of shoulder roundings, from the imaginary section line, with the at least one areal recess (6, 6', 6"),
- wherein in each case two recesses (6', 6") that are arranged one above the other in the radial direction are provided, the smallest distance between said recesses (6', 6") being 2.0 mm, and/or
- wherein at least one shoulder-side block row (2) is provided, the transverse grooves (3) of which open outward at the shoulder flank surface, wherein the groove bottoms (3b) of the transverse grooves (3) have end portions (3a) that extend in the radial direction over 10% to 30% of the profile depth and are offset inwardly with respect to the shoulder flank surface, said end portions (3a) likewise being provided with ribs (5) that do not project beyond the level of the shoulder flank surfaces.

2. Pneumatic vehicle tire according to Claim 1, **characterized in that** the recesses (6, 6', 6") have a radial extent of 10% to 70% of the profile depth.

3. Pneumatic vehicle tire according to Claim 1 or 2, **characterized in that** the recesses (6, 6', 6") have an extent in the circumferential direction of 70% to 120% of the profile depth.

4. Pneumatic vehicle tire according to one of Claims 1 to 3, **characterized in that** the bottom of the recesses (6, 6') is covered with the ribs (5).

5. Pneumatic vehicle tire according to one of Claims 1 to 4, **characterized in that** the recesses (6, 6', 6") are designed in a quadrilateral manner.

6. Pneumatic vehicle tire according to one of Claims 1 to 5, **characterized in that** the ribs (5) have a width (b₁) of 1.0 mm to 5.0 mm at their base.

7. Pneumatic vehicle tire according to one of Claims 1 to 6, **characterized in that** the ribs (5) have a mutual center-to-center spacing (c) of 1.2 mm to 7.0 mm.

8. Pneumatic vehicle tire according to one of Claims 1 to 7, **characterized in that** the ribs (5) have a height (h) of 0.5 mm to 5.0 mm.

9. Pneumatic vehicle tire according to one of Claims 1 to 8, **characterized in that** the ribs (5) are trapezoidal or semicircular in cross section.

10. Pneumatic vehicle tire according to one of Claims 1 to 9, **characterized in that** the recesses (6, 6', 6") are provided at spacings of 5 cm to 15 cm over the tire circumference.

## Revendications

1. Pneumatique de véhicule, en particulier pneumatique de véhicule utilitaire, comprenant une carcasse à une ou plusieurs couches, une ceinture à plusieurs couches ou nappe sommet et une bande de roulement profilée dotée de rainures réalisées à la profondeur de profilé, dans lequel la bande de roulement profilée est dotée, sur les épaulements de pneumatique,
- soit d'une rangée de blocs (2) respective, dont les blocs sont séparés les uns des autres par des rainures transversales (3),
- soit d'une nervure profilée (7) respective,
dans lequel les blocs (1) des rangées de blocs (2) côté épaulement ou les nervures profilées (7) côté épaulement comprennent respectivement un bord périphérique (1a, 7a) délimitant latéralement la surface de contact au sol du pneumatique ou un arrondi d'épaulement présentant un rayon allant jusqu'à 30,0 mm, dans lequel des surfaces de flanc d'épaulement s'étendant dans la direction radiale se raccordent aux bords périphériques (1a, 7a) ou aux arrondis d'épaulement, et dans lequel, dans les arrondis d'épaulement, une ligne de coupe imaginaire est définie entre une enveloppe de la bande de roulement qui se prolonge au-delà de l'arrondi d'épaulement et la surface de flanc d'épaulement qui se prolonge au-delà de l'arrondi d'épaulement,
dans lequel les surfaces de flanc d'épaulement sont dotées, sur la périphérie du pneu et à des intervalles en particulier réguliers, d'au moins un évidement plan (6, 6',6") présentant une profondeur (t) de 0,5 mm à 5,0 mm, lequel évidement contient des nervures (5) s'étendant parallèlement les unes aux autres, dont la hauteur (h) est telle que les nervures (5) ne dépassent pas au-delà du niveau des surfaces de flanc d'épaulement, **caractérisé en ce que**
les surfaces de flanc d'épaulement sont dotées de l'au moins un évidement plan (6, 6', 6") à l'intérieur d'une distance (a) par rapport au bord périphérique respectif (1a, 7a) ou, dans le cas d'arrondis d'épaulement, par rapport à la ligne de coupe imaginaire, laquelle distance vaut 1,25 fois à 2,5 fois la profondeur de profilé,
- deux évidements superposés (6', 6") dans la direction radiale étant respectivement prévus, dont la plus petite distance l'un par rapport à l'autre vaut 2,0 mm et/ou
- au moins une rangée de blocs (2) côté épaulement étant prévue, dont les rainures transversales (3) débouchent vers l'extérieur au niveau de la surface de flanc d'épaulement, les fonds de rainure (3b) des rainures transversales (3) comprenant des parties d'extrémité (3a) s'étendant dans la direction radiale sur 10% à 30% de la profondeur de profilé, et décalées vers l'intérieur par rapport à la surface de flanc d'épaulement, lesquelles parties d'extrémité sont également dotées de nervures (5) qui ne dépassent pas au-delà du niveau des surfaces de flanc d'épaulement.

2. Pneumatique de véhicule selon la revendication 1, **caractérisé en ce que** les évidements (6, 6', 6") présentent une étendue radiale de 10% à 70% de la profondeur de profilé.

3. Pneumatique de véhicule selon la revendication 1 ou 2, **caractérisé en ce que** les évidements (6, 6', 6") présentent dans la direction périphérique une étendue de 70% à 120% de la profondeur de profilé.

4. Pneumatique de véhicule selon l'une des revendications 1 à 3, **caractérisé en ce que** le fond des évidements (6, 6') est recouvert par les nervures (5).

5. Pneumatique de véhicule selon l'une des revendications 1 à 4, **caractérisé en ce que** les évidements (6, 6', 6") sont de configuration quadrangulaire.

6. Pneumatique de véhicule selon l'une des revendications 1 à 5, **caractérisé en ce que** les nervures (5) présentent, au niveau de leurs base, une largeur (b₁) de 1,0 mm à 5,0 mm.

7. Pneumatique de véhicule selon l'une des revendications 1 à 6, **caractérisé en ce que** les nervures (5) présentent, de centre à centre, une distance réciproque (c) de 1,2 mm à 7,0 mm.

8. Pneumatique de véhicule selon l'une des revendications 1 à 7, **caractérisé en ce que** les nervures (5) présentent une hauteur (h) de 0,5 mm à 5,0 mm.

9. Pneumatique de véhicule selon l'une des revendications 1 à 8, **caractérisé en ce que** les nervures (5) sont de forme trapézoïdale ou semi-circulaire en section transversale.

10. Pneumatique de véhicule selon l'une des revendications 1 à 9, **caractérisé en ce que** les évidements (6, 6', 6") sont prévus sur la périphérie de pneumatique à des distances de 5 cm à 15 cm.
